# EUROPEAN PATENT APPLICATION

(11) **EP 1 886 897 A1**
(43) Date of publication of application: **13.02.2008**
(21) Application number: 06756607.5
(22) Date of filing: 19.05.2006
(51) Int. Cl.: B62D 5/04, B62D 5/30, B62D 6/00, H02P 3/22

(54) **ELECTRIC POWER STEERING SYSTEM DEVICE CONTROLLER**

(30) Priority: 20.05.2005 JP 2005147622
(71) Applicant: NSK Ltd., Tokyo 141-8560 (JP)
(72) Inventor: ITAKURA, Yusuke c/o NSK LTD., Gunma 3718527 (JP); KOBAYASHI, Nobuyuki c/o NSK LTD., Gunma 3718527 (JP); HISANAGA, Tomonori c/o NSK LTD., Gunma 3718527 (JP); MIYOSHI, Osamu c/o NSK LTD., Gunma 3718527 (JP); KANAI, Shinji c/o NSK LTD., Gunma 3718527 (JP)
(74) Representative: Hooiveld, Arjen Jan Winfried
(86) International application number: PCT/JP2006/310507
(87) International publication number: WO 2006/123839

(57) **Abstract**

The present invention provides a high-performance control unit for an electric power steering apparatus structured such as to improve a steering feeling at a time of a control stop of the control apparatus by calculating a steering torque correction short-amount without stopping a function of a motor control signal monitoring means and applying an electromagnetic brake to the motor in correspondence to the steering torque correction short-amount even in the case of stopping a motor control during generation of a steering assist torque, lighten a load applied to a driver due to a rapid release of a tire torsion force at a time of stopping the assist, and prevent a driver from feeling an uncomfortable feeling.

## Description

### Technical Field

The present invention relates to a control unit for an electric power steering apparatus structured such as to apply a steering assist force generated by a motor to a steering system of an automobile or a vehicle, and more particularly to a control unit for an electric power steering apparatus which lightens a load applied to a driver by a torsion force of a tire being rapidly released at an assist-stop time of the control unit, and is improved such that the driver does not feel an uncomfortable feeling.

### Background Art

An electric power steering apparatus energizing a steering apparatus of an automobile or a vehicle by an assist load on the basis of a rotating force of a motor is structured such as to apply a driving force of the motor as the assist load to a steering shaft or a rack shaft by a transmission mechanism such as a gear, a belt or the like via a reduction gear. The conventional electric power steering apparatus executes a feedback control of a motor current for accurately generating an assist torque (a steering assist torque). The feedback control is structured such as to regulate a motor applied voltage in such a manner that a difference between a current command value and a motor current detected value becomes small or zero, and the motor applied voltage is generally regulated by regulating a duty ratio of a pulse width modulation (PWM) control.

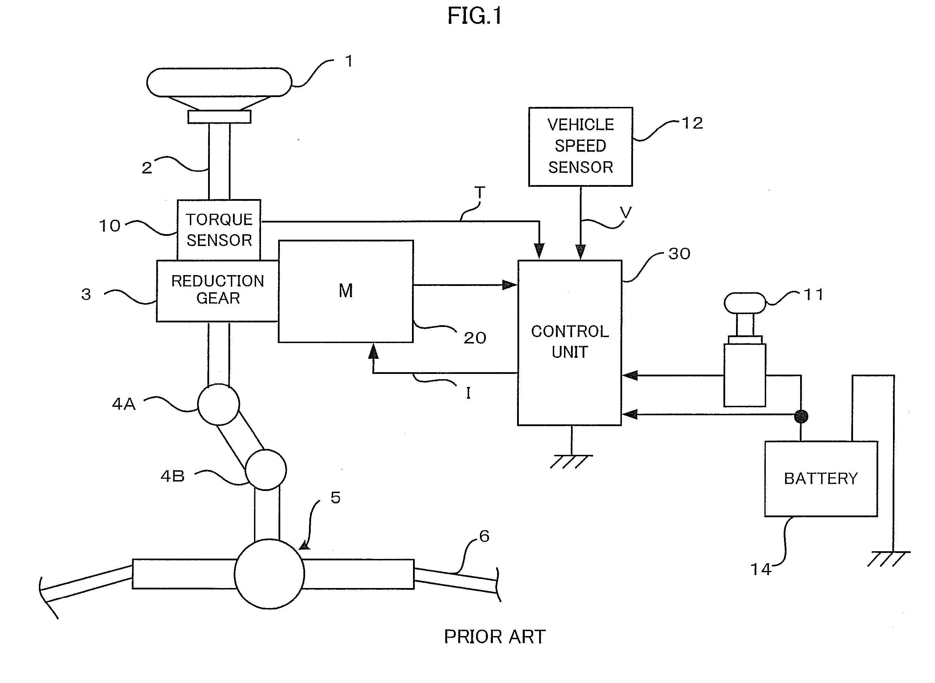

In this case, a description will be given of a general structure of the electric power steering apparatus with reference to Fig. 1.

A column shaft 2 of a steering wheel 1 is coupled to a tie rod 6 of steered wheels via reduction gear 3, universal joints 4A and 4B and a pinion rack mechanism 5. The column shaft 2 is provided with a torque sensor 10 detecting a steering torque of the steering wheel 1, and a motor 20 assisting a steering force of the steering wheel 1 is coupled to the column shaft 2 via the reduction gear 3. An electric power is supplied to a control unit 30 controlling the power steering apparatus from a battery 14, and an ignition key signal is input to the control unit 30 from an ignition key 11, whereby the control unit 30 calculates a steering assist command value I of the assist command on the basis of a steering torque T detected by the torque sensor 10 and a vehicle speed V detected by the vehicle speed sensor 12, and the electric current supplied to the motor 20 is controlled on the basis of the calculated steering assist command value I.

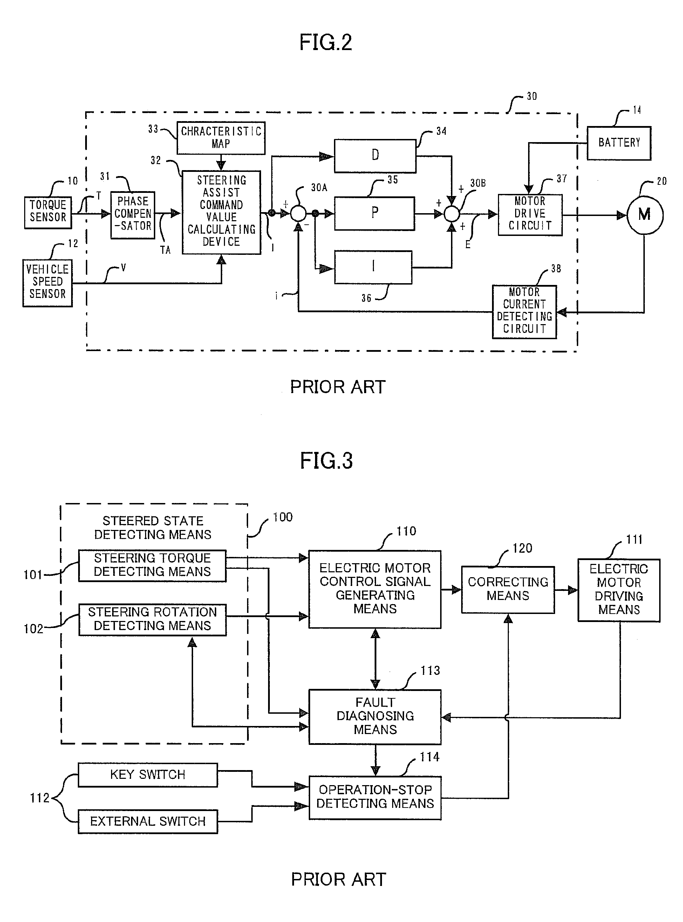

The control unit 30 is mainly constituted by a CPU (or a MPU or a MCU) , however, a general function executed by a program in an inner portion of the CPU is shown by Fig. 2.

A description will be given of a function and an operation of the control unit 30 with reference to Fig. 2. The steering torque T detected by the torque sensor 10 so as to be inputted is corrected its phase by a phase compensator 31 for increasing a stability of the steering system, and a steering torque TA corrected its phase is inputted to a steering assist command value calculating device 32. Further, the vehicle speed V detected by the vehicle speed sensor 12 is also inputted to the steering assist command value calculating device 32. The steering assist command value calculating device 32 decides the steering assist command value I corresponding to a control target value of the electric current supplied to the motor 20, with reference to a characteristic map (a lookup table) 33 on the basis of the inputted steering torque TA and the inputted vehicle speed V.

The steering assist command value I is inputted to a subtracter 30A, and is inputted to a differential compensator 34 of a feedforward control system for increasing a response speed, and a deviation (I - i) determined by the subtracter 30A is inputted to a proportional calculating device 35, and is inputted to an integral calculating device 36 for improving a characteristic of a feedback control system. A proportional output form the proportional calculating device 35 and an output of the integral calculating device 36 are inputted to an adder 30B, an output of the differential compensator 34 is also added to the adder 30B, and a current command value E corresponding to a result of addition in the adder 30B is inputted as a motor driving signal to a motor drive circuit 37. A motor current value i of the motor 20 is detected by a motor current detecting circuit 38, and the motor current detected value i is inputted to the subtracter 30A so as to be feedbacked. The motor drive circuit 37 is structured by an H bridge (in the case of a two-phase motor) or a three-phase bridge circuit (in the case of a three-phase motor) of a driving element constituted by FETs or the like.

The electric power steering apparatus mentioned above stops the assist on the basis of the motor control, in the case that the ignition key 11 is turned to an off-state from an on-state, the case that a stop signal is generated from a fault diagnosing means (not shown) detecting a fault of the control apparatus and the like. At a time of the assist-stop as mentioned above, a torsion force of the tire is rapidly released, and a load applied to the steering by the driver is increased, so that an uncomfortable feeling is generated in the steering.

Conventionally, as the electric power steering apparatus associated with the problem mentioned above, there are structures shown in Japanese Patent Publication Nos. H7-94226 B2 and H7-94227 B2.

An electric power steering apparatus described in Japanese Patent Publication No. H7-94226 B2 is provided with an operation-stop detecting means detecting an operation-stop command of an electric motor control signal generating means, and a correcting means reducing the electric motor control signal gradually on the basis of a detection signal from the operation-stop detecting means, and the correcting means is provided between the electric motor control signal generating means and the electric motor driving means.

Fig. 3 shows the structure mentioned above. The electric power steering apparatus is provided with a steered state detecting means 100 constituted by a steering torque detecting means 101 detecting a steering torque of a steering system and a steering rotation detecting means 102 detecting a steering rotating speed, an electric motor control signal generating means 110 deciding an electric motor control signal on the basis of a detection signal from the steered state detecting means 100 so as to output, and an electric motor driving means 111 driving an electric motor on the basis of the electric motor control signal, and is further provided with switches 112 such as a key switch and the like, a fault diagnosing means 113 of the apparatus , an operation-stop detecting means 114 detecting an operation-stop of the apparatus itself, and a correcting means 120 arranged between the electric motor control signal generating means 110 and the electric motor driving means 111 for reducing the electric motor control signal gradually on the basis of the detection signal from the operation-stop detecting means 114.

In the structure mentioned above, when the switches 112 stopping the operation of the apparatus itself is turned off, and when the stop signal is outputted from the fault diagnosing means 113, the operation-stop detecting means 114 detects the fact that the operation of the apparatus is stopped on the basis of the signals. Further, the correcting means 120 reduces the electric motor control signal gradually on the basis of the detection signal from the operation-stop detecting means 114 so as to output to the electric motor driving means 111, thereby stopping the electric motor slowly.

Further, a electric power steering apparatus shown in Japanese Patent Publication No. H7-94227 B2 is structured such as to be provided with an initial state detecting means detecting an operation-start state of an electric motor control signal generating means, and a correcting means correcting an electric motor control signal in such a manner as to increase the electric motor control signal gradually to a decided value, and the correcting means is provided between the electric motor control signal generating means and the electric motor driving means.

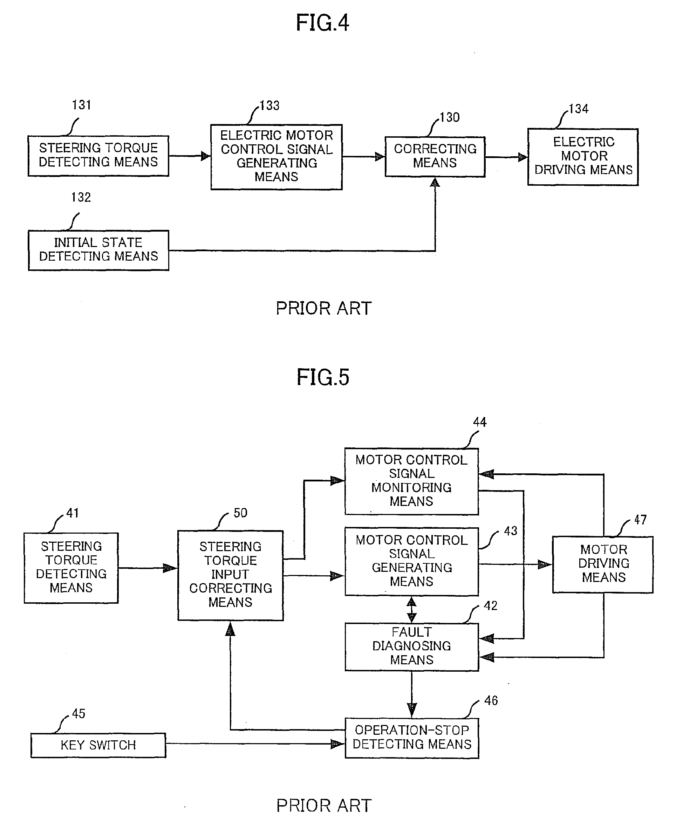

Fig. 4 shows a structure of the electric power steering apparatus mentioned above. If a switch such as a key switch or the like is put in, respective detection signals are outputted from a steering torque detecting means 131 and an initial state detecting means 132. In an electric motor control signal generating means 133, an electric motor control signal is decided on the basis of a steering torque signal output from the steering torque detecting means 131 so as to be outputted. In the correcting means 130, if a detection signal indicating a starting state is inputted from the initial state detecting means 132, the electric motor control signal is corrected for being increased to the decided value of the electric motor control signal gradually, and the electric motor is drive-controlled by the electric motor driving means 134 on the basis of the corrected electric motor control signal.

In the methods respectively shown in Japanese Patent Publications Nos. H7-94226 B2 and H7-94227 B2, since the electric motor control signal is decreased or increased independently from the electric motor control signal generating means, there is a problem that it is impossible to operate a motor control signal monitoring means during the decrease or increase of the motor control signal. In other words, in the case of detecting the operation-stop state or the initial state, a result of calculation of the motor control signal is changed by force so as to be decreased or increased gradually, so that the result of calculation of the motor control signal is corrected. Accordingly, the relation between the normal steering detection signal and the current actually driving the motor is not established, and it is unavoidable to stop the monitoring during the correcting operation.

As an apparatus for solving the problem mentioned above, there is a structure shown in Japanese Patent Application Laid-open No. 2002-127926 A.

Fig. 5 shows an example of the apparatus shown in Japanese Patent Application Laid-open No.2002-127926A, and is structured such as to have amonitoring functions even at a time of decreasing the assist. A steering torque detection signal from a steering torque detecting means 41 constituting the steered state detecting means is inputted to a steering torque input correcting means 50 and a fault diagnosing means 42, and a correction signal of the steering torque detection signal corrected by the steering torque input correcting means 50 is inputted to a motor control signal generating means 43 and a motor control signal monitoring means 44. Further, an output of a key switch 45 is inputted to an operation-stop detecting means 46, and a motor driving means 47 controls so as to drive the motor in accordance with a motor control signal from the motor control signal generating means 43. The fault diagnosing means 42 monitors whether or not a fault is generated in the steering torque detecting means 41, the motor control signal monitoring means 44 and the motor driving means 47, and a result of diagnosis of the fault diagnosing means 42 is inputted to the operation-stop detecting means 46 and the motor control signal generating means 43. The operation-stop detecting means 46 is structured such as to detect an off-operation by the key switch 45, and detect the operation-stop command of the motor control signal generating means 43.

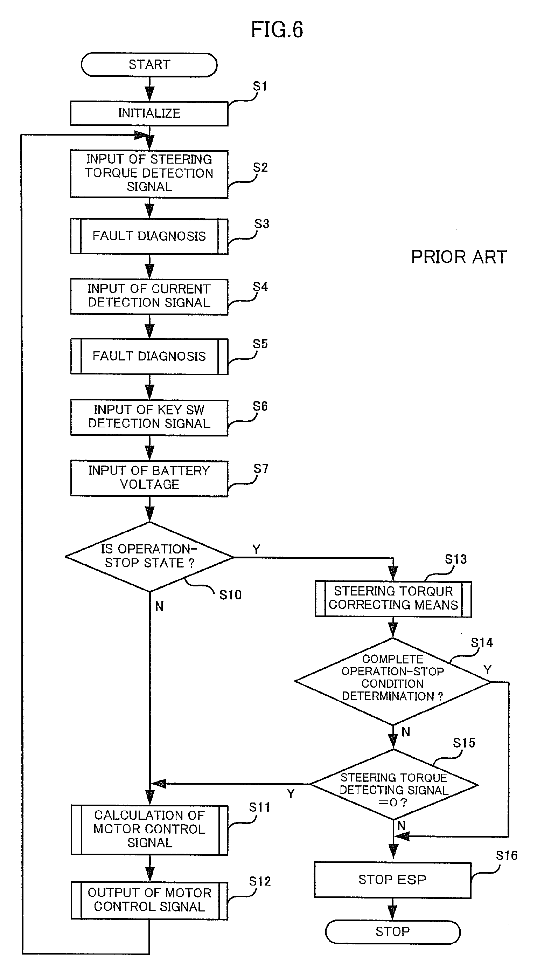

In the structure mentioned above, a description will be given of an operation thereof with reference to a flow chart in Fig. 6.

First, the step initializes a whole of a control system (Step S1), and the fault diagnosing means 42 inputs the steering torque detection signal from the steering torque detecting means 41 (Step S2), and executes a fault diagnosis (Step S3). The fault diagnosing means 42 next inputs a current detection signal from the motor driving means 47 (Step S4), and executes a similar fault diagnosis (Step S5), the motor control signal monitoring means 44 executes a monitoring function, and the operation-stop detecting means 46 inputs the detection signal from the key switch 45 (Step S6), further inputs a battery voltage (Step S7), and determines whether or not the operation-stop state is generated by any one of a fault generation, a key switch operation and a transition of the battery voltage to the outside of the operating range (Step S10). If the operating state does not stop, the motor control signal generating means 43 calculates the motor control signal in accordance with the steering torque detection signal from the steering torque detecting means 41 via the steering torque input correcting means 50 (Step S11), and outputs the motor control signal (Step S12). Accordingly, the motor is controlled so as to be driven via the motor driving means 47. Together with this operation, the step is returned to the Step S2 mentioned above.

On the other hand, in the case that the operation-stop state is determined by the operation-stop detecting means 46 in the Step S10 mentioned above, the steering torque detection signal from the steering torque detecting means 41 is decreased in accordance with the time in the steering torque input correcting means 50 (Step S13), and a complete operation-stop condition (Step S14) is determined, and the motor control signal monitoring means 44 determines whether the steering torque correction signal is "0" or not (Step S15). If the steering torque correction signal is not "0", the step goes to the Step S11 mentioned above, and if it is "0", the step is finished by stopping the electric power steering apparatus (EPS) (Step S16). In this case, the determination of the Step S14 mentioned above corresponds to a determination of a complete operation-stop caused by a normal lower voltage drop.

An assist torque characteristic in Japanese Patent Application No. 2002-127926 A mentioned above becomes as shown in Fig. 7. In the case of starting an assist lowering process at a time point t1, for example, if a rapid stop is generated at the later time point t2 due to a voltage drop, a returning force of the torsion of the steering system in accordance with the steering is applied to the steering wheel coupled to the steering system via the steering system, and applies a load to a driver, so that a steering feeling is deteriorated so as to generate an uncomfortable feeling.

On the other hand, since the electric power steering apparatus requires a lot of electric power in a limited power supply environment, that is, an automotive power supply, a further voltage drop is caused by consuming a lot of electric power at a time of the voltage drop. Accordingly, if the process mentioned above is executed in the case that the voltage drop is significant, there is a problem that the voltage drop stops the other electrical equipment as well as the electric power steering apparatus, even an engine of a vehicle by extension, and there is a region which can not keep a normal operation at a time of the voltage drop. Therefore, in the conventional structure, in the case of entering into the region which can not keep the normal operation due to the voltage drop even during the assist lowering for preventing the torsion of the tire, such a control as to stop the assist is executed.

In this case, since the voltage is lowered gradually under the normal used condition, such the tire torsion as to apply the uncomfortable feeling to the driver is not left on the basis of the previous lowering process even if the assist is stopped during the assist-lowering process for preventing the tire torsion.

However, the electric power steering applied-vehicle kind has been enlarged in size recently, a torsion force generated for increasing the assist force is enlarged, a necessary amount for the preventing process is increased, and an electric power consumption is increased due to the increase of the assist force, so that a possibility that the voltage is lowered during the preventing process is increased. Further, a performance demanded for the electric power steering apparatus becomes high. Under these circumstances mentioned above, the electric power steering apparatus is demanded to carry over the tire torsion preventing process as long as possible.

Further, the control unit for the electric power steering apparatus is constituted by a plurality of function blocks as shown in Fig. 2, and a plurality of circuit blocks are structured for achieving the function blocks. For example, there is provided a structure such as a motor drive circuit 37 and a motor current detecting circuit 38 in which the phase compensator 31 is constituted by a filter, and the blocks 32 to 36 are constituted by a micro computer. Accordingly, used parts are different in the structured circuit blocks. As a result, an operable voltage is different in each of the blocks. Accordingly, it is an actual condition that it is unavoidable to stop the assist control in correspondence to the function block which does not function at the highest voltage in the function blocks associated with the normal assist control, with respect to the voltage drop. However, since several function blocks in addition to the micro computer can operate till the comparatively low voltage even in the region in which the normal assist control can not be executed, a brake control can be executed till the comparatively low voltage by using them.

The present invention is made by taking the circumstances mentioned above into consideration, and an object of the present invention is to provide a high-performance control unit for an electric power steering apparatus structured such as to improve a steering feeling at a time of a control-stop of the control unit without stopping a function of a motor control signal monitoring means even in the case of stopping a motor control in a low voltage side or a high voltage side outside a normal operation range of a battery voltage, lighten a load applied to a driver due to a rapid release of a tire torsion force at a time of stopping an assist, and prevent a driver from feeling an uncomfortable feeling.

### Disclosure of the Invention

The present invention relates to a control unit for an electric power steering apparatus provided with a motor coupled to a steering system of a vehicle and generating a steering assist torque on the basis of a current command value, a steering torque detecting means detecting a steering torque of the steering system, and a motor driving means driving the motor on the basis of the steering torque detected by the steering torque detecting means, and the object mentioned above of the present invention can be achieved by correcting the steering torque by a steering torque input correcting means in a region in which a normal control of the motor can be executed, and brake controlling the motor in a region in which the normal control of the motor can not be executed, at a time of stopping the motor during the generation of the steering assist torque, and the brake control can be achieved by calculating a steering torque correction short-amount and providing a means for applying an electromagnetic brake to the motor in correspondence to the steering torque correction short-amount.

The object mentioned above of the present invention can be more effectively achieved by the steering torque correction short-amount being constituted by a time, or the electromagnetic brake being executed by a short circuit of terminals of the motor.

The present invention relates to a control unit for an electric power steering apparatus provided with a steered state detecting means detecting a steered state of a steering system, a motor control signal generating means deciding a motor control signal on the basis of the steered state detecting signal from the steered state detecting means so as to output, a motor driving means driving a motor on the basis of the motor control signal from the motor control signal generating means, a motor control signal monitoring means executing a monitoring of the motor control signal generating means on the basis of the signals from the steered state detecting means and the motor driving means, an operation-stop detecting means detecting an operation-stop command of the motor control signal generating means, and a steered state signal correcting means provided between the steered state detecting means and the motor control signal generating means, and the object mentioned above of the present invention can be achieved by a structure in which the control apparatus is provided with a steering torque correction short-amount calculating means calculating a steering torque correction short-amount on the basis of a detection of the operation-stop detecting means, and an electromagnetic brake means provided within the motor control signal generating means, the steered state signal correcting means corrects a steered state detection signal corresponding to an input of the motor control signal generating means in accordance with a time on the basis of the detection signal from the operation-stop detecting means, the steering torque correction short-amount calculating means calculates the steering torque correction short-amount so as to output a brake signal when the operation-stop detecting means detects a complete operation-stop, and the electromagnetic brake means applies an electromagnetic brake to the motor in accordance with the brake signal.

Further, the present invention relates to a control unit for an electric power steering apparatus provided with a steered state detecting means detecting a steered state of a steering system, a motor control signal generating means deciding a motor control signal on the basis of the steered state detecting signal from the steered state detecting means so as to output, a motor driving means driving a motor on the basis of the motor control signal from the motor control signal generating means, an operation-stop detecting means detecting an operation-stop command of the motor control signal generating means, a plurality of steered state signal correcting means provided between the steered state detecting means and the motor control signal generating means, and a correcting method selecting means for selectively utilizing a plurality of steered state signal correcting means, and the object mentioned above of the present invention can be achieved by a structure in which the control unit is provided with a steering torque correction short-amount calculating means calculating a steering torque correction short-amount on the basis of a detection of the operation-stop detecting means, and an electromagnetic brake means provided within the motor control signal generating means, the steered state signal correcting means selected by the correcting method selecting means corrects a steered state detection signal corresponding to an input of the motor control signal generating means in accordance with a time on the basis of the detection signal from the operation-stop detecting means, the steering torque correction short-amount calculating means calculates the steering torque correction short-amount so as to output a brake signal when the operation- stop detecting means detects a complete operation-stop, and the electromagnetic brake means applies an electromagnetic brake to the motor in accordance with the brake signal.

The object mentioned above of the present invention can be more effectively achieved by determining the steering torque correction short-amount by time, or the electromagnetic brake being executed by a short-circuit of terminals of the motor, or setting a function of determining a restart condition after the short-circuit and restarting in the case of satisfying the restart condition.

### Brief Description of the Drawings

Fig. 1 is a view showing a general structure example of an electric power steering apparatus;
Fig. 2 is a block diagram showing a structure example of a control unit;
Fig. 3 is a block structure view showing an example of a conventional control unit;
Fig. 4 is a block structure view showing the other example of the conventional control unit;
Fig. 5 is a block structure view showing further the other example of the conventional control unit;
Fig. 6 is a flow chart showing an operation example of the conventional control unit;

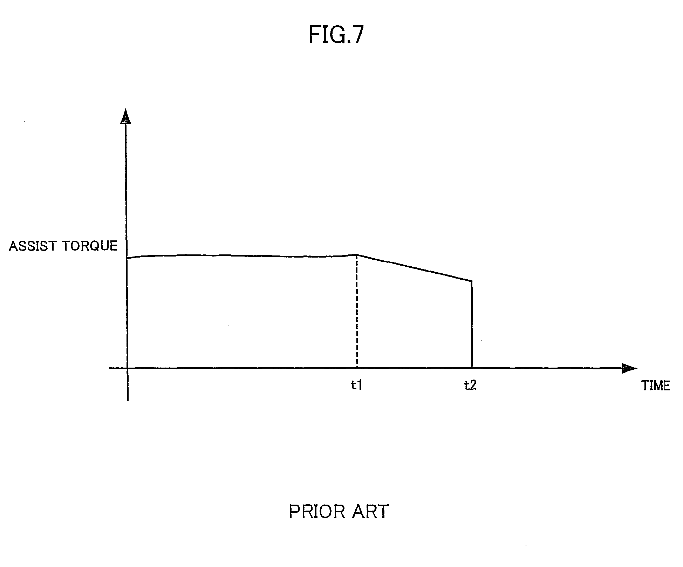

Fig. 7 is a view showing a characteristic example of the conventional control unit;
Fig. 8 is a block structure view showing an embodiment in accordance with the present invention;
Fig. 9 is a flow chart showing an operation example of the present invention;
Fig. 10 is a view for explaining an operation of the present invention;
Fig. 11 is a view for explaining the operation of the present invention;
Fig. 12 is a structure view showing a contact point connection example in the case of applying an electromagnetic brake;
Fig. 13 is a view for explaining the operation of the present invention;
Fig. 14 is a characteristic view showing an effect of the present invention; and
Fig. 15 is a block structure view showing the other embodiment in accordance with the present invention.

### Best Mode for Carrying Out the Invention

The present invention is structured such as to calculate a steering torque correction short-amount at a time of stopping a motor during generation of a steering assist torque of an electric power steering apparatus, that is, at a time of stopping an assist, and carry over a tire torsion force preventing process as long as possible by applying an electromagnetic brake to the motor in correspondence to the calculated steering torque correction short-amount. Since the electromagnetic brake is structured such as to operate with a power generator by short-circuiting a motor terminal and apply the brake on the basis of a regenerative braking generated by the power generator, it is possible to achieve the tire torsion force prevention without supplying any electric power to the motor. Further, since a motor control signal is calculated by using a steered state detection signal after decreasing or increasing a signal corresponding to a motor current command in accordance with a time, as a result of calculation by a motor control signal generating means itself, while keeping a function of the motor control signal generating means, and detecting an operation-stop state or a control-start state, it is possible to monitor even during the correction. Since it is possible to correct while keeping the other control blocks than a torque system, by correcting the torque system, it is possible to execute a stable correction.

A description will be given below of an embodiment in accordance with the present invention with reference to the accompanying drawings.

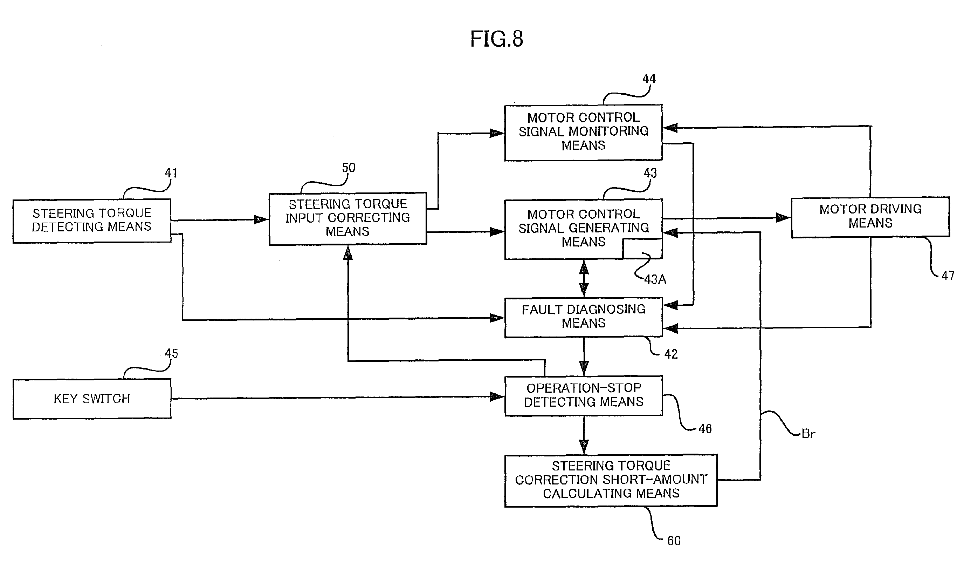

Fig. 8 shows an example in accordance with the present invention in correspondence to Fig. 5, there is provided a steering torque correction short-amount calculating means 60 calculating a correction short-amount of a steering torque when an operation-stop detecting means 46 detects an operation-stop, and an electromagnetic brake means 43A applying an electromagnetic brake to the motor in accordance with the steering torque correction short-amount calculated by the steering torque correction short-amount calculating means 60 is provided within a motor control signal generating means 43.

A steering torque detection signal from a steering torque detecting means 41 constituting a steered state detecting means is inputted to a steering torque input correcting means 50 and a fault diagnosing means 42, and a steering torque detection signal correction signal corrected by the steering torque input correcting means 50 is inputted to the motor control signal generating means 43 and a motor control signal monitoring means 44. Further, an output of a key switch 45 is inputted to the operation-stop detecting means 46, and a motor driving means 47 controls so as to drive the motor in accordance with a motor control signal from the motor control signal generating means 43. The fault diagnosing means 42 monitors whether or not a fault is generated in the steering torque detecting means 41, the motor control signal monitoring means 44 and the motor driving means 47, and a result of diagnosis of the fault diagnosing means 42 is inputted to the operation-stop detecting means 46 and the motor control signal generating means 43. The operation-stop detecting means 46 is structured such as to detect an operation-stop command of the motor control signal generating means 43 on the basis of a detection of an off-operation by the key switch 45, or a detection of a fault generation by the fault diagnosing means 42. In this case, a battery voltage is inputted to the operation-stop detecting means 46.

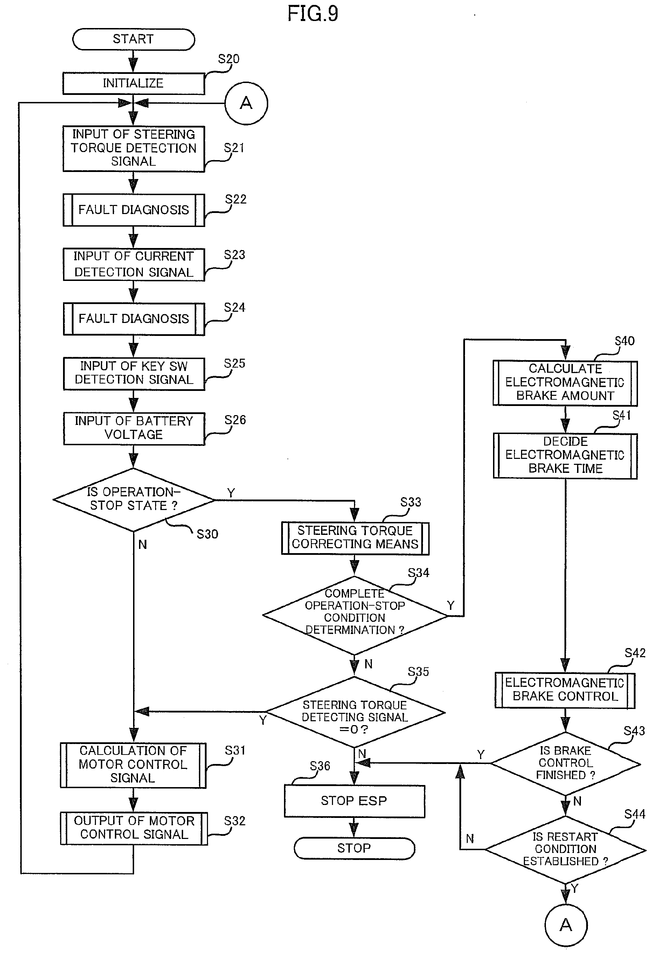

In the structure mentioned above, a description will be given of an operation thereof with reference to a flow chart in Fig. 9.

First, the step initializes a whole of a control system (Step S20), and the fault diagnosing means 42 inputs the steering torque detection signal from the steering torque detecting means 41 (Step S21), and executes a fault diagnosis (Step S22). The fault diagnosing means 42 next inputs a current detection signal from the motor driving means 47 (Step S23), and executes a similar fault diagnosis (Step S24), the motor control signal monitoring means 44 executes a monitoring function, and the operation-stop detecting means 46 inputs the detection signal from the key switch 35 (Step S25), further inputs a battery voltage (Step S26), and determines whether or not the operation-stop state is generated by any one of a fault generation, a key switch operation and a transition of the battery voltage to the outside of the operating range (Step S30). If the operating state does not stop, the motor control signal generating means 43 calculates the motor control signal in accordance with the steering torque detection signal from the steering torque detecting means 41 via the steering torque input correcting means 50 (Step S31), and outputs the motor control signal (Step S32). Accordingly, the motor is controlled so as to be driven via the motor driving means 47. Together with this operation, the step is returned to the Step S21 mentioned above.

On the other hand, in the case that the operation-stop state is determined by the operation-stop detecting means 46 in the Step S30 mentioned above, the step decreases the steering torque detection signal from the steering torque detecting means 41 in accordance with the time in the steering torque input correcting means 50 (Step S33), and determines a complete operation-stop condition (Step S34), and the motor control signal monitoring means 44 determines whether or not the steering torque correction signal is "0" (Step S35). If the steering torque correction signal is not "0", the step goes to the Step S31 mentioned above, and if it is "0" , the step is finished by stopping the electric power steering apparatus (EPS) (Step S36). In this case, the determination of the Step S34 mentioned above corresponds to a determination of a complete operation-stop caused by a lower normal voltage drop than the normal case.

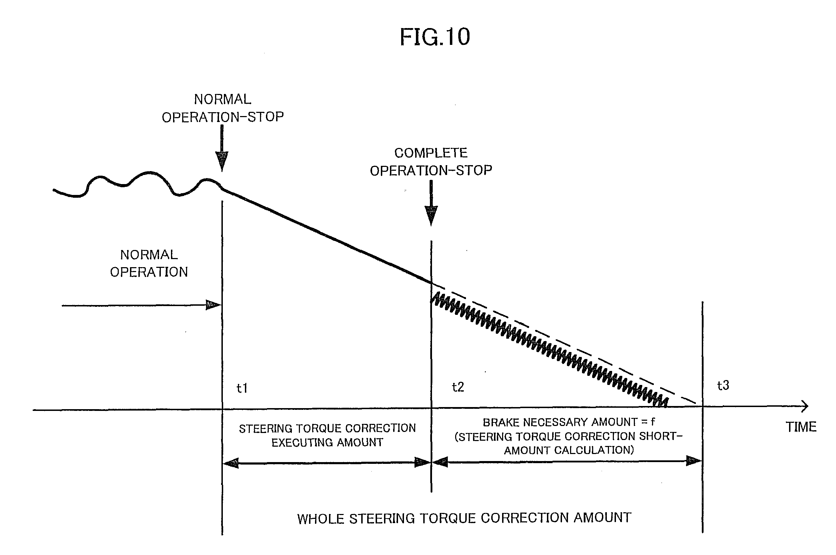

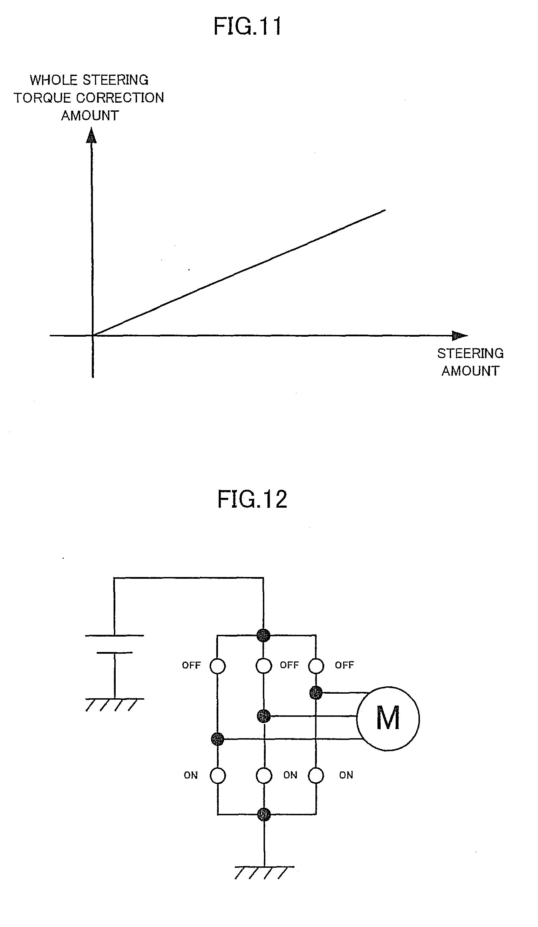

If the complete operation-stop condition is determined by the operation-stop detecting means 46 in the Step S34 mentioned above, the steering torque correction short-amount calculating means 60 calculates a necessary electromagnetic brake amount in accordance with a method shown in Fig. 10 (Step S40). In other words, in Fig. 10, if the normal operation-stop is detected by the operation-stop detecting means 46 at a time point t1, a whole steering torque correction amount to a time point t3 is calculated on the basis of a predetermined characteristic data as shown in Fig. 11, at the time point t1. Next, if the complete operation-stop is detected by the operation-stop detectingmeans 46 at a time point t2, a necessary electromagnetic brake amount is calculated on the basis of the whole steering torque correction amount, and a steering torque correction executing amount from the time point t1 to the time point t2 (Step S40), and an electromagnetic brake time is decided (Step S41). The steering torque correction short-amount calculating means 60 outputs a brake signal Br in accordance with the decided electromagnetic brake time.

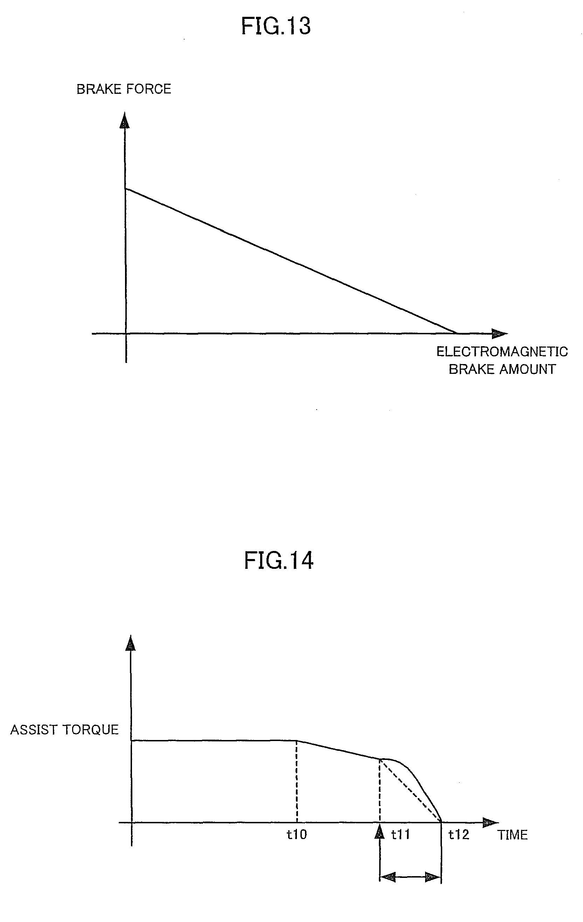

Further, if the brake signal Br is input to the electromagnetic brake means 43A from the steering torque correction short-amount calculating means 60, the electromagnetic brake means 43A turns on, for example, all of a lower stage of switching elements (for example, FET) within a drive circuit as shown in Fig. 12, and turns off the switching element in an upper stage so as to control the electromagnetic brake (Step S34). Asmentionedabove, since the motor is operated as the power generator by short-circuiting the motor terminal, and is operated as a regenerative brake, an assist amount is increased at that degree. In this case, a relation between a brake remaining amount and a brake force is, for example, as shown in Fig. 13.

In this case, the electromagnetic brake control may turn on the switching elements in the upper stage and turn off the switching elements in the lower stage inversely to Fig. 12. Further, Fig. 12 shows a three-phase motor, however, it is possible to apply to an H bridge circuit in a two-phase motor in the same manner.

Thereafter, the step determines the end of the brake control on the basis of whether or not the brake remaining amount becomes smaller than a predetermined value or the like (Step S43), and determines whether or not a restart condition (whether or not the voltage returns to a voltage capable of starting the normal control during the brake control, or whether or not an ignition key is reclosed or the like) is established in the case that the brake control is not finished (Step S44), and the step returns to the Step S21 in the case that the restart condition is established. Further, in the case that the brake control is finished in the Step S43, the step stops the electric power steering apparatus so as to finish in the case that the restart condition is not established in the Step S44 mentioned above (Step S36).

An assist characteristic as shown in Fig. 14 can be obtained by executing the electromagnetic brake control as mentioned above . As is known from the characteristic view, since the electromagnetic brake is applied by short-circuiting the motor terminal at a time point t11 after starting the assist decrease (a time point t10), an assist amount is increased, any sudden stop on the basis of the voltage drop is not generated, and it is possible to lighten the load of the driver. In other words, since the electromagnetic brake state is formed by lowering the assist gradually at a time of a low voltage, calculating the brake necessary amount at a time of a complete operation-stop and short-circuiting between the motor terminals, it is possible to carry over the operation of preventing the tire torsion force without supplying the electric power to the motor.

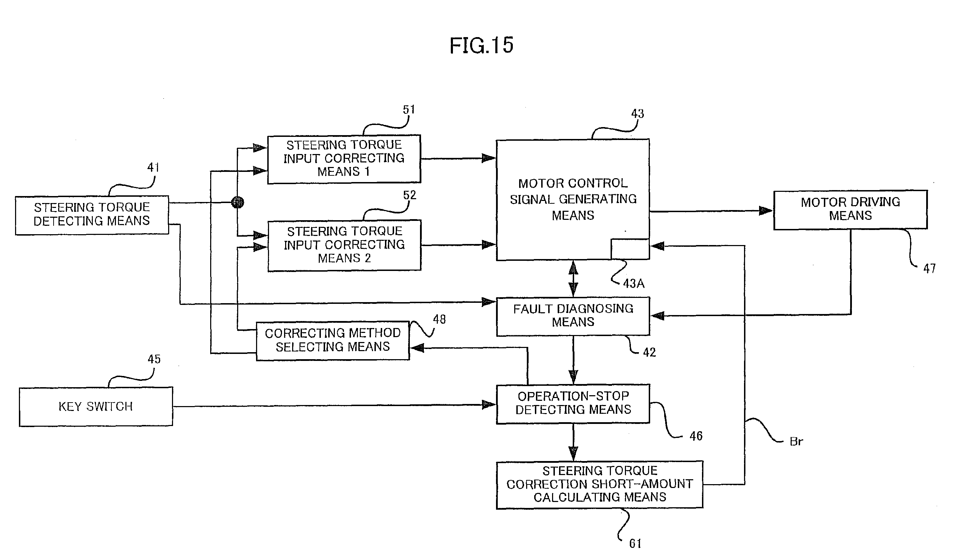

Fig. 15 shows the other example in accordance with the present invention in correspondence to Fig. 8, and the present example changes the steering torque input correcting means 50 to two steering torque input correcting means 51 and 52 having different characteristics, and is provided with a correcting method selecting means 48 switching them. The present embodiment is also provided with the steering torque correction short-amount calculating means 61 calculating the steering torque correction short-amount in accordance with the operation-stop detecting means 46, and the electromagnetic brake means 43A operating in accordance with the brake signal Br is provided within the motor control signal generating means 43.

The present example is provided with the steering torque input correcting means 51 and 52 having the different characteristics, and is provided with the correcting method selecting means 48 for selecting an optimum correcting means for the system on the basis of the detection signal from the operation-stop detecting means 46. It is possible to optimally decrease the steering torque detection signal input to the motor control signal generating means 43 in correspondence to a state of the system by switching the steering torque input correcting means 51 and 52 by the correcting method selecting means 48. As a condition for switching the steering torque input correcting means 51 and 52, there is a stop time of the normal system on the basis of the off-operation of the ignition key, a stop time of the system serving as a fail-safe caused by a fault of the steering torque input system, and the like.

In the case that the correcting method selecting means 48 determines the correction on the basis of the off-operation of the ignition key, the normal torque input is used as an input of the motor control signal generating means 43, an attenuation at a fixed gain is executed as a correction, and a time of correction in the steering torque input correcting means 51 is set to a sufficiently long time. In the case that the correction on the basis of the fault detection of the torque system is determined, a torque input value before a fail is used as the input of the motor control signal generating means 43, an attenuation of a maximum input value is executed as a correction in the steering torque input correcting means 52, and the correction is finished in a short time.

In the structure mentioned above, an operation thereof is the same as the flow chart in Fig. 9, and the electromagnetic brake operation as shown in Fig. 14 can be achieved even in the present example. In other words, even in the present example, since the electromagnetic brake state is formed by reducing the assist gradually at a time of the low voltage, calculating the brake necessary amount at a time of the complete operation-stop and short-circuiting between the motor terminals, it is possible to carry over the operation of preventing the tire torsion force without supplying the electric power to the motor.

In the case of stopping the motor in the state in which the steering assist torque is generated, the returning force of the torsion of the steering system caused by the steering operation is applied to the steering wheel coupled to the steering system via the steering system, however, in accordance with the control unit for the electric power steering apparatus on the basis of the present invention, the returning force of the torsion is applied to the motor and the motor comes to the regenerative braking state by short-circuiting between the terminals of the motor at a time of stopping the motor, so that it is possible to achieve an effect capable of suppressing the returning force and suppressing the returning force applied to the steering wheel.

Further, in accordance with the present invention, since the electromagnetic brake state is formed by decreasing the assist gradually and short-circuiting between the motor terminals at a time of the low voltage, it is possible to prevent the tire torsion force without supplying any electric power to the motor.

Further, in accordance with the present invention, since the correction can be executed while keeping the operation of control block except the torque system, by decreasing or increasing the signal corresponding to the motor current command in accordance with the time, as a result of calculation by the motor control signal generating means itself, while keeping the function of the motor control signal generating means, and correcting the torque system by calculating the motor control signal while using the steered state detection signal after detecting the operation-stop state or the control-start state, it is possible to execute a stable correction.

In this case, in the description mentioned above, the description is given particularly of the case of the low voltage side control in the other range than the battery voltage normal operation range, as the voltage condition of the motor control-stop, however, it goes without saying that the present invention is not limited to this, but can be applied to the motor-stop control in the high voltage side in the other range than the predetermined battery voltage normal operation range, and the same effect as the lowvoltage side control can be obtained.

## Claims

1. A control unit for an electric power steering apparatus comprising:
a motor being coupled to a steering system of a vehicle and generating a steering assist torque on the basis of a current command value;
a steering torque detectingmeans detecting a steering torque of the steering system;
a motor driving means driving the motor on the basis of the steering torque detected by the steering torque detecting means; and
a means calculating a steering torque correction short-amount at a time of stopping the motor during generation of the steering assist torque and braking the motor by an electromagnetic brake in correspondence to the steering torque correction short-amount.

2. The control unit for the electric power steering apparatus as claimed in claim 1, wherein the steering torque correction short-amount is calculated as a time.

3. The control unit for the electric power steering apparatus as claimed in claim 1, wherein the electromagnetic brake is actuated when terminals of the motor are short-circuited.

4. A control unit for an electric power steering apparatus comprising:
a steered state detecting means detecting a steered state of a steering system;
a motor control signal generating means deciding a motor control signal on the basis of the steered state detecting signal from the steered state detecting means so as to output the motor control signal;
a motor driving means driving a motor on the basis of the motor control signal from the motor control signal generating means;
a motor control signal monitoring means monitoring of the motor control signal generating means on the basis of the signals from the steered state detecting means and the motor driving means;
an operation-stop detecting means detecting an operation-stop command of the motor control signal generating means;
a steered state signal correcting means provided between the steered state detecting means and the motor control signal generating means;
a steering torque correction short-amount calculating means calculating a steering torque correction short-amount on the basis of a detection of the operation-stop detecting means; and
an electromagnetic brake means provided within the motor control signal generating means;
wherein the steered state signal correcting means corrects a steered state detection signal corresponding to an input of the motor control signal generating means in accordance with a time on the basis of the detection signal from the operation-stop detecting means, the steering torque correction short-amount calculating means calculates the steering torque correction short-amount so as to output a brake signal when the operation-stop detecting means detects a complete operation-stop, and the electromagnetic brake means brakes the motor in accordance with the brake signal.

5. The control unit for the electric power steering apparatus as claimed in claim 4, wherein the steering torque correction short-amount is calculated as a time.

6. The control unit for the electric power steering apparatus as claimed in claim 4, wherein the electromagnetic brake is actuated when terminals of the motor are short-circuited.

7. The control unit for the electric power steering apparatus as claimed in claim 4, further comprising a function of determining a restart condition after the short-circuit and restarting in the case of satisfying the restart condition.

8. A control unit for an electric power steering apparatus comprising:
a steered state detecting means detecting a steered state of a steering system;
a motor control signal generating means deciding a motor control signal on the basis of the steered state detecting signal from the steered state detecting means so as to output the motor control signal;
a motor driving means driving a motor on the basis of the motor control signal from the motor control signal generating means;
an operation-stop detecting means detecting an operation-stop command of the motor control signal generating means;
a plurality of steered state signal correcting means provided between the steered state detecting means and the motor control signal generating means;
a correcting method selecting means for selecting and utilizing the plurality of steered state signal correctingmeans ;
a steering torque correction short-amount calculating means calculating a steering torque correction short-amount on the basis of a detection of the operation-stop detecting means; and
an electromagnetic brake means provided within the motor control signal generating means;
wherein the steered state signal correcting means selected by the correcting method selecting means corrects a steered state detection signal corresponding to an input of the motor control signal generating means in accordance with a time on the basis of the detection signal from the operation-stop detecting means,
the steering torque correction short-amount calculating means calculates the steering torque correction short-amount so as to output a brake signal when the operation-stop detecting means detects a complete operation-stop, and
the electromagnetic brake means brakes the motor in accordance with the brake signal.

9. The control unit for the electric power steering apparatus as claimed in claim 8, wherein the steering torque correction short-amount is calculated as a time.

10. The control unit for the electric power steering apparatus as claimed in claim 8, wherein the electromagnetic brake is actuated when terminals of the motor are short-circuited.

11. The control unit for the electric power steering apparatus as claimed in claim 8, further comprising a function of determining a restart condition after the short circuit and restarting in the case of satisfying the restart condition.
